# EUROPÄISCHE PATENTSCHRIFT

(11) **EP 2 555 962 B1**
(45) Veröffentlichungstag und Bekanntmachung des Hinweises auf die Patenterteilung: **19.11.2014**
(21) Anmeldenummer: 11716818.7
(22) Anmeldetag: 30.03.2011
(51) Int. Cl.: B62D 25/08

(54) **MODULARER KAROSSERIEAUFBAU EINES KRAFTFAHRZEUGS**
MODULAR BODY STRUCTURE OF A MOTOR VEHICLE
STRUCTURE MODULAIRE DE CARROSSERIE D'UN VÉHICULE À MOTEUR

(30) Priorität: 03.04.2010 DE 102010013842
(43) Veröffentlichungstag der Anmeldung: 13.02.2013
(73) Patentinhaber: Volkswagen Aktiengesellschaft, 38440 Wolfsburg (DE)
(72) Erfinder: KRAUTH, Werner, 38442 Wolfsburg (DE); SCHIFFERLI, Gwendolin, 38459 Bahrdorf-Saalsdorf (DE)
(86) Internationale Anmeldenummer: PCT/EP2011/001595
(87) Internationale Veröffentlichungsnummer: WO 2011/120682

(56) Entgegenhaltungen:
- US-A- 4 372 575

## Beschreibung

Die Erfindung betrifft einen modularen Karosserieaufbau eines Kraftfahrzeugs nach dem Oberbegriff des Anspruchs 1.

Bei Kraftfahrzeugen werden insbesondere zur Federung der Vorderräder üblicherweise Federbeine verwendet, da diese hinsichtlich der Funktion, des erforderlichen Bauraums und des Gewichts Vorteile bringen. Dabei werden die Federbeine jeweils am oberen Ende in einem Dom einer Federbeinaufnahme befestigt und abgestützt. Die Federbeinaufnahme ist dabei Bestandteil des Karosserieaufbaus und zusammen mit weiteren angrenzenden Karosseriestrukturblechen ausgebildet.

Die Lage des Federbeindoms im Karosserieaufbau ist dabei maßgeblich für die Radführung und die Fahrwerkeigenschaften, so dass die Ausbildung der Federbeinaufnahmen in allgemein bekannter Weise individuell für jeden Fahrzeugtyp erfolgt. Dies bedingt bei einem Hersteller unterschiedlicher Fahrzeugtypen und Fahrzeugvarianten eine Vielzahl unterschiedlicher Karosseriebauteile mit entsprechend hohen Kosten für die Herstellung, die Logistik und die Montage.

Es ist bereits bekannt unterschiedliche Federbeinlagen unter Verwendung gleicher Bauteile zu realisieren (DE 10 2005 025 611 A1). Hier wird vorgeschlagen für unterschiedliche Höhenlagen von Federbeinen in den zugeordneten Federbeindom an Einlegerscheiben unterschiedlicher. Stärken einzusetzen. Damit ist jedoch nur eine unterschiedliche Abstützhöhe eines Federbeins zu erreichen. Ein zusätzlicher konstruktiver Freiraum für eine allgemeine Variation der Federbeinlage ist damit nicht gegeben.

Weiter ist es bekannt (EP 1 197 360 A2) durch Verwendung von Adapterteilen einen Federbeindom im Karosserieaufbau so anzuordnen, dass damit ein relativ großer Abstand zu einer darüber liegenden Frontklappe für einen Fußgängeraufprallschutz erreicht wird.

Weiter ist es bekannt, Fahrzeugvarianten mit modifiziertem Aussehen und/oder modifizierten Funktionen möglichst kostengünstig unter Verwendung möglichst vieler Gleichteile herzustellen:

Dazu ist es beispielsweise bekannt (DE 10 2004 035 530 A1) bei einem modularen Karosserieaufbau unterschiedliche Fahrgastzellen mit unterschiedlichen Vorderwagen zu kombinieren. Zudem ist es bekannt (DE 103 01 183 A1) eine Kotflügelbank mit gestuften Anschlussebenen herzustellen, an denen jeweils gleiche Kotflügel für eine Variation des Fahrzeugaussehens in unterschiedlichen Höhenpositionen angebracht werden können. Für einen ähnlichen Zweck ist es auch bekannt (DE 100 23 193 A1) bei sonst gleichen Anschlussteilen unterschiedliche Kotflügelbänke für Typenvariationen zur Verfügung zu stellen.

Zudem ist es bekannt (EP 0 326 710 A2) zur Realisierung von zwei Radspurweiten an Fahrzeugen jeweils Federbeine mit zwei entsprechend in der Einbaulage unterschiedlichen Dämpferkopfausbildungen vorzusehen. Dazu wird an einem aufbauseitigen etwa horizontalen Anschlussblech einer Lageraufnahme eine relativ große Öffnung vorgehalten, in der jeweils entsprechend der gewünschten Radspurweite der Dämpferkopf mit einem Lagerflansch, zu dem ein Dämpfer exzentrisch angeordnet ist, abgestützt und befestigt wird. Die Anpassung an unterschiedliche Radspurweiten wird hier somit über eine Modifikation des Dämpferkopfes erreicht, was nachteilig eine große Öffnung an der Lageraufnahme erfordert. Zudem ist keine optimale Krafteinleitung in die Karosserie über das horizontale mit einer großen Öffnung versehene Anschlussblech zu erreichen.

Aufgabe der Erfindung ist es, einen gattungsgemäßen Karosserieaufbau eines Kraftfahrzeugs so weiterzubilden, dass mit wenig Aufwand unterschiedliche Federbeinlagen in weiten Grenzen realisierbar sind.

Diese Aufgabe wird dadurch gelöst, dass bei einem wenigstens teilweisen modularen Karosserieaufbau ein erstes Federbeinaufnahme-Modul mit einer bestimmten Domausbildung und mit Anschlusselementen einer bestimmten Anschlussgeometrie für die Verbindung mit zugeordneten Karosseriestrukturelementen zur Verfügung steht. Zudem soll wenigstens ein weiteres Federbeinaufnahme-Modul mit gleicher Anschlussgeometrie jedoch unterschiedlicher Domausbildung für eine Variation des Karosserieaufbaus hinsichtlich der Federbeinlage zur Verfügung stehen.

Damit kann bei einem sonst gleichen oder weitgehend gleichen Karosserieaufbau eine Variation der Federbeinlage insbesondere für unterschiedliche Fahrzeugvarianten oder Fahrzeugklassen realisiert werden, wobei lediglich die Federbeinaufnahme-Modulteile unterschiedlich gestaltet sind und keine Gleichteile darstellen. Der Karosserieaufbau für unterschiedliche Fahrzeugtypen mit entsprechend unterschiedlichen Federbeinlagen kann damit vergleichsweise kostengünstiger als mit dem bisherigen individuellen Aufbau von Federbeinaufnahmen durchgeführt werden.

Die Variation der Federbeinlage wird hier somit aufbauseitig durch die Verwendung unterschiedlicher Federbeinaufnahme-Module durchgeführt, wobei vorteilhaft jeweils ein gleicher Dämpferkopf in einer daran angepassten kleinen Aufnahmeöffnung des Federbeinaufnahme-Moduls verbaut werden kann.

In einer konkreten Ausführungsform werden zwei spiegelbildlich gleiche Ausführungen eines ersten Federbeinaufnahmemoduls für einen linksseitigen und rechtsseitigen Einbau in den Vorderwagen einer Karosserie zur Verfügung gestellt. Zudem werden zur Realisierung einer zweiten Federbeinlage entsprechend zwei spiegelbildliche Ausführungen eines zweiten Federbeinaufnahmemoduls mit unterschiedlicher Domausbildung zur Verfügung gestellt, die je nach gewünschtem Fahrzeugtyp wechselweise verbaut werden können.

Erfindungsgemäß ist eine große konstruktive Freiheit in der Lagedimensionierung von Federbeinen möglich, da die Unterschiede in der Domausbildung darin liegen können, dass die Domauswölbung mit seiner zentralen Öffnung bezüglich der jeweils gleichen Anschlussgeometrie sowohl in der Höhenlage als auch in der Seitenlage oder einer Schrägstellung variiert werden kann.

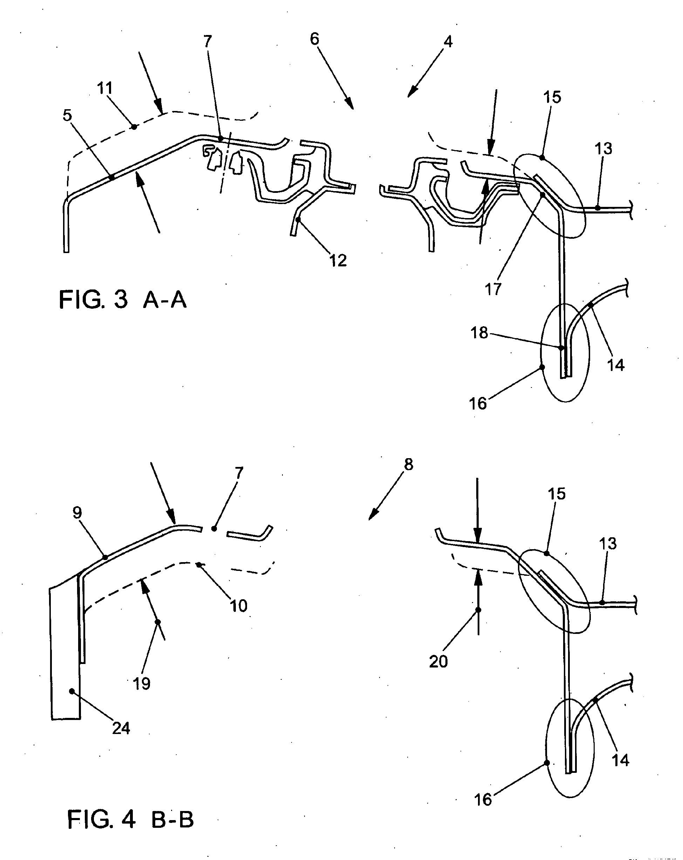

Konkret können die Anschlusselemente der Anschlusskontur der Federbeinaufnahme-Module einfach durch Blechbereiche der Domanschrägung und/oder durch nach unten etwa vertikal abragende Anschlussbleche gebildet sein. Vorteilhaft hat die Federbeinaufnahme um seine relativ kleine Aufnahmeöffnung einen wiederum relativ kleinen etwa horizontalen Bereich zur Abstützung des Federbeins, wobei anschließend an diesen Bereich die Wandung des Federbeindoms in eine Schräge (Wandbereich (5; 17 in Fig. 3) für eine optimierte Einleitung der Kräfte in die Karosserie übergeht. Damit können unerwünschte Schwingungen verhindert oder zumindest wesentlich reduziert werden.

Als Karosseriestrukturelemente für eine Verbindung mit einem Federbeinaufnahmemodul können einfach Blechteile eines angrenzenden Wasserkastens verwendet werden, die gegebenenfalls einerseits mit einer Domanschrägung und andererseits mit einem etwa vertikal nach unten abragenden Anschlussblech des Federbeinaufnahmemoduls verbunden werden.

Anhand einer Zeichnung wird die Erfindung weiter erläutert.

Es zeigen:
Fig. 1 eine perspektivische Teilansicht von schräg oben in den linken Teil eines-Vorderwagens im Bereich einer Federbeinaufnahme mit einem ersten Federbeinaufnahmemodul;
Fig. 2 eine Ansicht entsprechend Fig. 1 mit einem modifizierten Federbeinaufnahme-Modul;
Fig. 3 einen schematisierten Schnitt entlang der Linie A-A aus Fig. 1; und
Fig. 4 einen Schnitt entlang der Linie B-B aus Fig. 2.

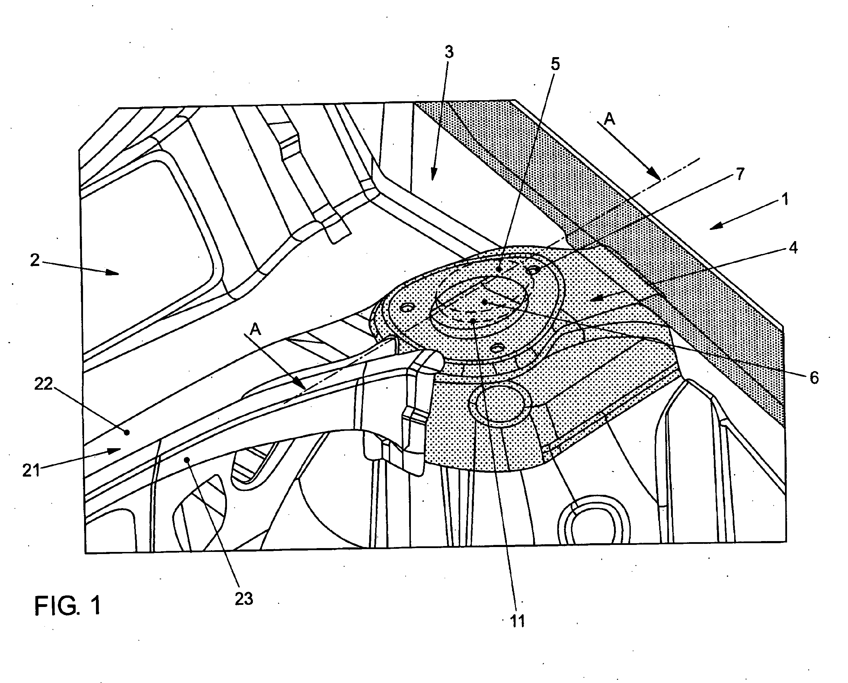

In Fig. 1 ist teilweise ein Karosserieaufbau 1 im linken Teil eines Vorderwagens 2 eines Kraftfahrzeugs im Bereich einer Federbeinaufnahme 3 dargestellt.

Die Federbeinaufnahme 3 ist hier mit einem ersten Federbeinaufnahmemodul 4 hergestellt, an dem ein Federbeindom 5 mit einer zentralen Öffnung 6 und Anschlussbohrungen 7 geformt ist.

An den Federbeindom 5 ist eine Domstrebe 21 angeschlossen, die aus einem Wasserkastenunterteil 22 und einem Wasserkastenvorderteil 23 gebildet ist. Dieser Federbeindom 5 hat in der montierten Position des Federbeinaufnahme-Moduls 4 bezüglich des Vorderwagenaufbaus 2 eine bestimmte Position, die die Federbeinlage des hier zugeordneten Fahrzeugtyps bestimmt.

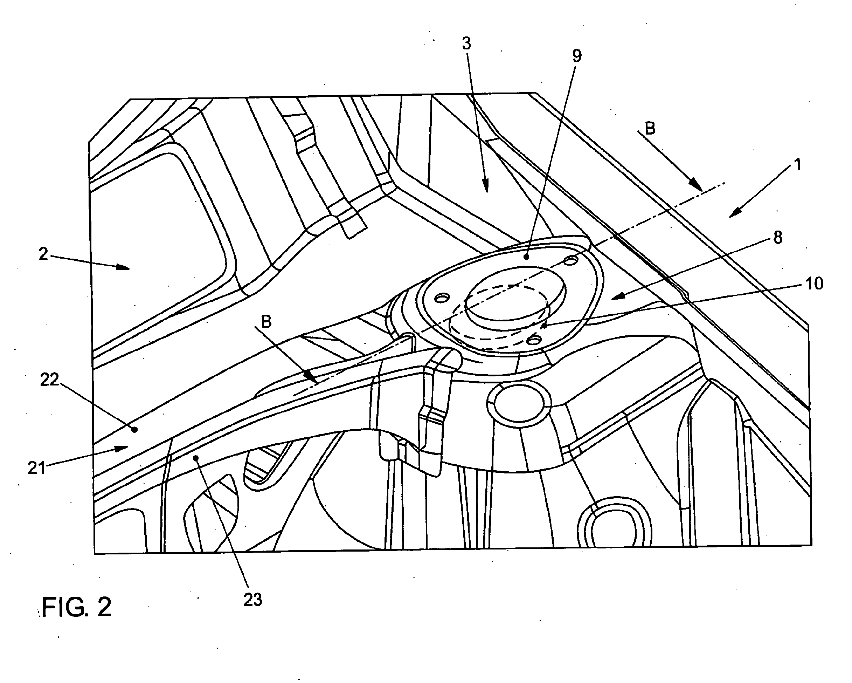

In Fig. 2 ist bei ersichtlich gleicher Anschlussgeometrie ein zweites Federbeinaufnahme-Modul 8 verbaut mit einem hinsichtlich seiner Lage modifizierten Federbeindom 9, welcher hierfür eine entsprechend modifizierte Federbeinlage eines anderen Fahrzeugtyps höher und weiter seitlich außen liegt. Zum Vergleich ist hier die Lage des Federbeindoms 5 des ersten Federbeinaufnahme-Moduls 4 mit der strichlierten Linie 10 eingezeichnet. Entsprechend ist auch in Fig. 1 vergleichsweise die höhere und weiter seitlich positionierte Lage des Federbeindoms 9 mit der strichlierten Linie 11 angegeben. In Fig. 1 sind die für das zweite Federbeinaufnahme-Modul modifizierten Bauteile punktiert unterlegt - der übrige Bereich ist durch Gleichteile gebildet.

In der Schnittdarstellung der Fig. 3 entlang der Linie A-A aus Fig. 1 ist schematisch das erste Federbeinaufnahmemodul 4 mit dem aufgewölbten Federbeindom 5 und der zentralen Öffnung 6 erkennbar, in der bereits ein Federbein 12 mit seinem oberen Ende eingesetzt und an den Anschlussbohrungen 7 verschraubt ist. An der rechten Seite sind ein oberes Wasserkastenblech 13 und ein unteres Wasserkastenblech 14 jeweils in den Anschlussbereichen 15, 16 zum Federbeinaufnahme-Modul 4 dargestellt. Dabei ist das obere Wasserkastenblech 13 mit einer Abkantung flächig mit einer Domanschrägung 17 des Federbeindoms 5 verbunden. Im Schrägbereich des Anschlussbereichs 15 ist das Verhältnis Breite zu Höhe bevorzugt so zu wählen, dass der abgekantete Flansch des Wasserkastenblechs 13 möglichst steil abgestellt ist, um gegebenenfalls einen möglichst großen Radfreigang zur Verfügung zu stellen. Im Anschlussbereich 16 ist das untere Wasserkastenblech 14 mit einem Randstreifen mit einem vertikal nach unten abragenden Anschlussblech 18 des Federbeinaufnahme-Moduls 4 verbunden.

In Fig. 4 ist ein Schnitt entsprechend Fig. 3 entlang der Linie B-B aus Fig. 2 (ohne Federbein 12) dargestellt, bei dem anstelle des Federbeinaufnahme-Moduls 4 das modifizierte zweite Federbeinaufnahme-Modul 8 verbaut ist, wobei hier an der linken Seite auch der Anschluss an einen Längsträger 24 eingezeichnet ist. Ersichtlich ist dabei die Anschlussgeometrie in den Anschlussbereichen 15, 16 zum oberen Wasserkastenblech 13 und unteren Wasserkastenblech 14 unverändert gleich. Mit der strichlierten Linie 10 ist hier wiederum vergleichsweise die Lage des Federbeindoms 5 und in Fig. 3 mit der strichlierten Linie 11 die Lage des Federbeindoms 9 eingezeichnet. Daraus ist zu ersehen, dass der Federbeindom 9 an der linken Seite der Fig. 4 entsprechend der Abstandspfeile 19 bezüglich des ersten Federbeindoms 5 konkret um ca. 15 mm und an der rechten Seite entsprechend der Abstandspfeile 20 um ca. 9,6 mm versetzt liegt. Diese Modifikation in der Lage der entsprechenden Federbeine ist ersichtlich bei gleicher Anschlussgeometrie nur in der Ausprägung der unterschiedlichen Federbeinaufnahme-Module 4 und 8 realisiert.

## Patentansprüche

1. Karosserieaufbau eines Kraftfahrzeugs mit wenigstens einer Federbeinaufnahme,
**dadurch gekennzeichnet,dass** bei einem wenigstens teilweise modularen Karosserieaufbau (1) ein erstes Federbeinaufnahme-Modul (4) mit einer bestimmten Domausbildung (5) und mit Anschlusselementen (17, 18) einer bestimmten Anschlussgeometrie für die Verbindung mit zugeordneten Karosseriestrukturelementen (13, 14) zur Verfügung steht, und
dass wenigstens ein weiteres Federbeinaufnahme-Modul (8) mit gleicher Anschlussgeometrie jedoch unterschiedlicher Domausbildung (9) für eine Variation des Karosserieaufbaus (1) hinsichtlich der Federbeinlage zur Verfügung steht.

2. Karosserieaufbau nach Anspruch 1, **dadurch gekennzeichnet, dass** zwei spiegelbildlich gleiche Ausführungen eines ersten Federbeinaufnahme-Moduls (4), für einen linksseitigen und rechtsseitigen Einbau in den Vorderwagen (2) eines Karosserieaufbaus (1) sowie entsprechend zwei Ausführungen eines zweiten Federbeinaufnahme-Moduls (8) mit unterschiedlicher Domausbildung (5; 9) zur Verfügung stehen.

3. Karosserieaufbau nach Anspruch 1 oder 2, **dadurch gekennzeichnet, dass** die Unterschiede in der Domausbildung (5, 9) darin liegen, dass die Domauswölbung mit seiner zentralen Öffnung (6) bezüglich der jeweils gleichen Anschlussgeometrie in einer Höhenlage und/oder einer Seitenlage variiert und/oder einer Schrägstellung variiert.

4. Karosserieaufbau nach einem der Ansprüche 1 bis 3, **dadurch gekennzeichnet, dass** Anschlusselemente der Anschlusskontur der Federbeinaufnahme-Module durch Blechbereiche der Domanschrägung (17) und/oder durch nach unten etwa vertikal abragende Anschlussbleche (18) gebildet sind.

5. Karosserieaufbau nach einem der Ansprüche 1 bis 4, **dadurch gekennzeichnet, dass** Karosseriestrukturelemente für eine Verbindung mit einem Federbeinaufnahme-Modul (4; 8) Blechteile (13,14) eines Wasserkastens sind, die gegebenenfalls einerseits mit einer Domanschrägung (17) und andererseits mit einem etwa vertikal nach unten abragenden Anschlussblech (18) des Federbeinaufnahme-Moduls (4; 8) verbunden sind.

## Claims

1. Body structure of a motor vehicle with at least one suspension strut mounting, **characterized in that**, in an at least partially modular body structure (1), a first suspension strut mounting module (4) with a certain dome formation (5) and with connecting elements (17, 18) of a certain connection geometry for connection to associated body structure elements (13, 14) is available, and **in that** at least one further suspension strut mounting module (8) with the same connection geometry, but different dome formation (9) is available for a variation of the body structure (1) with respect to the position of the suspension strut.

2. Body structure according to Claim 1, **characterized in that** two laterally reversed identical embodiments of a first suspension strut mounting module (4) are available for left-hand and righthand installation in the front end (2) of a body structure (1), and, correspondingly, two embodiments of a second suspension strut mounting module (8) with a different dome formation (5; 9) are available.

3. Body structure according to Claim 1 or 2, **characterized in that** the differences in the dome formation (5, 9) reside in the fact that the dome bulge varies with the central opening (6) therein in a vertical position and/or a side position and/or an oblique position with respect to the respectively identical connection geometry.

4. Body structure according to one of Claims 1 to 3, **characterized in that** connecting elements of the connection contour of the suspension strut mounting modules are formed by sheet-metal regions of the dome slope (17) and/or by connecting plates protruding approximately vertically downwards.

5. Body structure according to one of Claims 1 to 4, **characterized in that** body structure elements for connection to a suspension strut mounting module (4; 8) are sheet-metal parts (13, 14) of a water tank that are optionally connected on the one hand to a dome slope (17) and on the other hand to an approximately vertically downwardly protruding connecting plate (18) of the suspension strut mounting module (4; 8).

## Revendications

1. Structure de carrosserie d'un véhicule automobile, comprenant au moins un logement de jambe de force, **caractérisée en ce que** dans le cas d'une structure de carrosserie (1) au moins partiellement modulaire, il est prévu un premier module de logement de jambe de force (4) avec une réalisation de dôme (5) déterminée et avec des éléments de raccordement (17, 18) de géométrie de raccordement déterminée pour la connexion à des éléments structurels de carrosserie associés (13, 14), et
**en ce qu'**il est prévu au moins un module de logement de jambe de force supplémentaire (8) ayant une géométrie de raccordement identique mais une réalisation de dôme différente (9) pour une variante de la structure de carrosserie (1) en termes de la position de la jambe de force.

2. Structure de carrosserie selon la revendication 1, **caractérisée en ce que** deux réalisations identiques en symétrie spéculaire d'un premier module de logement de jambe de force (4), pour une installation du côté gauche et du côté droit dans la partie avant du véhicule (2) d'une structure de carrosserie (1), ainsi que deux réalisations correspondantes d'un deuxième module de logement de jambe de force (8) avec une réalisation de dôme différente (5 ; 9) sont prévues.

3. Structure de carrosserie selon la revendication 1 ou 2, **caractérisée en ce que** les différences de réalisation de dôme (5, 9) résident dans le fait que la courbure du dôme avec son ouverture centrale (6) varie par rapport à la géométrie de raccordement identique respective dans une position en hauteur et/ou dans une position latérale et/ou dans une position oblique.

4. Structure de carrosserie selon l'une quelconque des revendications 1 à 3, **caractérisée en ce que** des éléments de raccordement du contour de raccordement des modules de logement de jambe de force sont formés par des régions de tôle de la partie biseautée du dôme (17) et/ou par des tôles de raccordement (18) faisant saillie vers le bas approximativement verticalement.

5. Structure de carrosserie selon l'une quelconque des revendications 1 à 4, **caractérisée en ce que** des éléments structurels de carrosserie pour une connexion à un module de logement de jambe de force (4 ; 8) sont des pièces en tôle (13, 14) d'un réservoir d'eau, lesquelles sont connectées éventuellement d'une part à une partie biseautée du dôme (17) et d'autre part à une tôle de raccordement (18), faisant saillie vers le bas approximativement verticalement, du module de logement de jambe de force (4 ; 8).
